# EUROPEAN PATENT APPLICATION

(11) **EP 3 982 526 A1**
(43) Date of publication of application: **13.04.2022**
(21) Application number: 20826273.3
(22) Date of filing: 28.05.2020
(51) Int. Cl.: H02M 3/28, H01F 27/32, H01F 27/36, H01F 30/10

(54) **SWITCHED-MODE POWER SUPPLY DEVICE AND VEHICLE-MOUNTED ELECTRIC COMPRESSOR EQUIPPED WITH SAME, AND METHOD FOR MANUFACTURING SWITCHED-MODE POWER SUPPLY DEVICE**

(30) Priority: 20.06.2019 JP 2019114656
(71) Applicant: Sanden Advanced Technology Corporation, Isesaki-shi, Gunma 372-8502 (JP)
(72) Inventor: TAKADA, Kohei, Isesaki-shi Gunma 372-8502 (JP); YOSHIDA, Hiroshi, Isesaki-shi Gunma 372-8502 (JP); SUGA, Yusuke, Isesaki-shi Gunma 372-8502 (JP)
(74) Representative: Prüfer & Partner mbB Patentanwälte · Rechtsanwälte
(86) International application number: PCT/JP2020/021042
(87) International publication number: WO 2020/255662

(57) **Abstract**

A switched-mode power supply device is provided which is capable of achieving a reduction in noise without using a large EMI filter or the like. The switched-mode power supply device 9 is provided with a switching transformer 15 which switches a lower-voltage power supply 12 to supply power to a control circuit 6 which serves as a higher-voltage power supply 11 side. The switching transformer 15 has a primary winding 13 on the lower-voltage power supply 12 side and a secondary winding 14 on the control circuit 6 side to insulate the lower-voltage power supply 12 side and the higher-voltage power supply 11 side from each other and separate the primary winding 13 and the secondary winding 14 from each other.

## Description

### Technical Field

The present invention relates to a switched-mode power supply device which insulates a higher-voltage power supply side and a lower-voltage power supply side from each other by a switching transformer and a vehicle-mounted electric compressor equipped with the switched-mode power supply device, and a method for manufacturing the switched-mode power supply device.

### Background Art

Due to actualization of global environmental problems in recent years, hybrid cars and electric vehicles have been developed. However, in air conditioners for air-conditioning vehicle interiors of these vehicles, electric compressors each having a motor are used instead of engine-driven compressors. In that case, the vehicle is equipped with a higher-voltage power supply comprised of a higher-voltage battery of, for example, about direct current 300V (DC300V), and a lower-voltage power supply comprised of a normal battery of about direct current 12V (DC12V). A voltage obtained by converting a DC voltage of the higher-voltage power supply into AC by an inverter circuit is supplied to the motor of the electric compressor.

On the other hand, the DC voltage of the lower-voltage power supply is converted into a predetermined voltage (for example, DC15V or the like) by a switched-mode power supply device, which is supplied to a control circuit which controls the inverter circuit. Therefore, a switching transformer comprised of an insulation transformer is provided in the present switched-mode power supply device and insulates the primary side of the switching transformer, i.e., the lower-voltage power supply side, and the secondary side, i.e., the higher-voltage power supply side.

Also, regarding noise reduction measures, the primary side (lower voltage side) and secondary side (higher voltage side) of the switching transformer are grounded to the chassis (GND) of the electric compressor via Y capacitors (line bypass capacitors), respectively. Further, an EMI filter circuit has been provided between the lower-voltage power supply and the switched-mode power supply device.

Here, as to a countermeasure against EMI noise caused by the switched-mode power supply device, there has also been taken a configuration in which a primary side ground and a secondary side ground insulated by the switching transformer are connected by a coupling capacitor. According to this configuration, it can be expected that a noise voltage is reduced by circulating noise transmitted between the primary winding and the secondary winding through a coupling (floating) capacitance between the windings of the switching transformer and thereby suppressing a common mode noise current flowing to the ground (chassis of the electric compressor) side (refer to, for example, Patent Document 1).

### Citation List

### Patent Documents

Patent Document 1: Japanese Patent No. 3473853
Patent Document 3: Japanese Patent Application Laid-Open No Hei 9(1997)-17657

### Summary of the Invention

### Problems to be solved by the Invention

Here, in the conventional switched-mode power supply device, it was customary to take a structure in which the secondary winding is sandwiched with the primary winding in order to improve the degree of coupling between the primary winding and the secondary winding of the switching transformer (refer to, for example, Patent Document 2). The reason is that when the degree of coupling between the primary winding and the secondary winding decreases, a surge voltage increases in a switching transformer used for a commercial AC 100V input or the like, for example due to an increase in leakage inductance, so that a breakdown voltage margin of a switching element is lowered, thereby leading to heat generation of a surge absorbing component and a reduction in power supply efficiency.

However, if the coupling degree between the primary winding and the secondary winding of the switching transformer is increased, the coupling (floating) capacitance between the windings increases and the amount of noise converted to a common mode increases. Therefore, it was necessary to take measures such as using a large EMI filter, using a ferrite core, etc.

The present invention has been made to solve such conventional technical problems and aims to provide a switched-mode power supply device capable of achieving a reduction in noise without using a large EMI filter or the like, a vehicle-mounted electric compressor having the switched-mode power supply device, and a method for manufacturing the switched-mode power supply device.

### Means for solving the Problems

A switched-mode power supply device of the present invention includes a switching transformer which switches a lower-voltage power supply to supply power to a control circuit on a higher-voltage power supply side, and is characterized in that the switching transformer has a primary winding on the lower-voltage power supply side and a secondary winding on the control circuit side to insulate the lower-voltage power supply side and the higher-voltage power supply side and the primary winding and the secondary winding are separated from each other.

The switched-mode power supply device of the invention of claim 2 is characterized in that in the above invention, the switching transformer includes a shield body provided between the primary winding and the secondary winding.

The switched-mode power supply device of the invention of claim 3 is characterized in that in the above invention, the shield body is connected to the primary winding of the switching transformer or a stable potential portion of the secondary winding.

The switched-mode power supply device of the invention of claim 4 is characterized in that in the invention of claim 2 or 3, the shield body is a winding having an insulating film, a shield layer, or an insulator.

The switched-mode power supply device of the invention of claim 5 is characterized in that in the above respective inventions, the lower-voltage power supply is a DC 12V power supply mounted on a vehicle, and the control circuit controls a vehicle-mounted electric compressor driven by the higher-voltage power supply mounted on the vehicle.

A vehicle-mounted electric compressor of the invention of claim 6 is characterized by including the switched-mode power supply device according to claims 1 to 5, the control circuit, an inverter circuit supplied with power from the higher-voltage power supply and controlled by the control circuit, and a motor driven by the inverter circuit.

A method for manufacturing the switched-mode power supply device of the invention of claim 7 is characterized in the invention of claim 4 by selecting the thickness of the insulating film of the winding constituting the shield body and/or the number of winding layers, the thickness of the shield layer and/or the number of layers, or the thickness of the insulator and/or the number of layers, thereby adjusting a coupling capacitance between the primary winding and the secondary winding of the switching transformer and the degree of coupling between the primary winding and the secondary winding.

### Advantageous Effect of the Invention

According to the present invention, in a switched-mode power supply device having a switching transformer which switches a lower-voltage power supply to supply power to a control circuit on a higher-voltage power supply side, the switching transformer is configured to have a primary winding on the lower-voltage power supply side and a secondary winding on the control circuit side to thereby insulate the lower-voltage power supply side and the higher-voltage power supply side and the primary winding and the secondary winding are separated from each other. Therefore, the degree of coupling between the primary winding and the secondary winding of the switching transformer is lowered and the coupling capacitance between the primary winding and the secondary winding is reduced, and as a result, the amount of noise converted to a common mode can be reduced.

At this time, if the lower-voltage power supply is, for example, the input of a low voltage like a DC 12V power supply mounted on a vehicle as in the invention of claim 5, it is relatively easy to reduce the degree of coupling between the primary winding and the secondary winding. An increase in surge voltage is limited even if the degree of coupling decreases. It is thus possible to achieve a reduction in noise without using a large EMI filter or the like.

Also, if a shield body is provided between the primary winding and the secondary winding of the switching transformer as in the invention of claim 2, a further reduction in noise can be achieved utilizing an electrostatic shield effect by connecting the shield body to the primary winding of the switching transformer or a stable potential portion of the secondary winding as in the invention of claim 3, for example.

Further, if the shield body is constituted of a winding having an insulating film, a shield layer, or an insulator as in the invention of claim 4, and the thickness of the insulating film of the winding and/or the number of winding layers, the thickness of the shield layer and/or the number of layers, or the thickness of the insulator and/or the number of layers is selected as in the invention of claim 7 to thereby adjust a coupling capacitance between the primary winding and the secondary winding of the switching transformer and the degree of coupling between the primary winding and the secondary winding, it becomes easy to make both power efficiency and noise reduction of the switching transformer compatible and design them optimally.

Then, the switched-mode power supply device of each invention described above is extremely suitable where it is provided in the vehicle-mounted electric compressor having the control circuit, an inverter circuit supplied with power from the higher-voltage power supply and controlled by the control circuit, and a motor driven by the inverter circuit as in the invention of claim 6.

### Brief Description of the Drawings

FIG. 1 is a block diagram of an electric circuit of a vehicle-mounted electric compressor of an embodiment to which a switched-mode power supply device of the present invention is applied (First Embodiment);
FIG. 2 is a diagram describing the structure of a switching transformer of the switched-mode power supply device of FIG. 1;
FIG. 3 is an electric circuit diagram of a switching transformer of another embodiment constituting a switched-mode power supply device of the present invention (Second Embodiment); and
FIG. 4 is a diagram describing the structure of the switching transformer of FIG. 3.

### Mode for carrying out the Invention

Hereinafter, embodiments of the present invention will be described in detail with reference to the drawings.

### [First Embodiment]

### (1) Vehicle-Mounted Electric Compressor 1

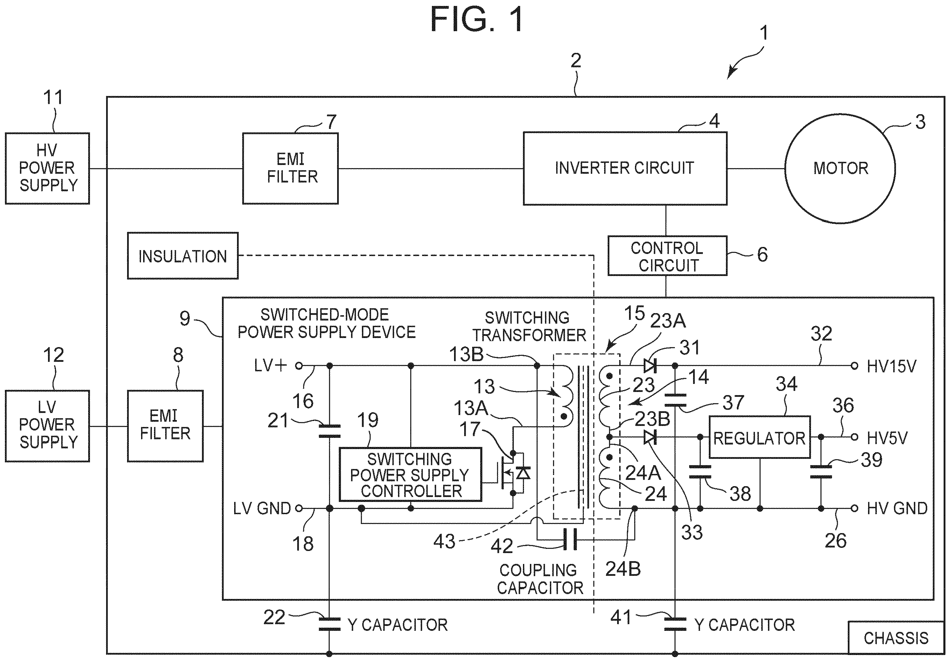

In FIG. 1, reference numeral 1 denotes a vehicle-mounted electric compressor which configures a refrigerant circuit of a vehicle air conditioning device which is mounted on a vehicle such as an electric vehicle or a hybrid vehicle and air-conditions a vehicle interior, and reference numeral 2 denotes a chassis thereof. Then, an unillustrated compression mechanism, a motor 3 which drives the compression mechanism, an inverter circuit 4 for operating the motor 3, a control circuit 6 for controlling the inverter circuit 4, EMI filter circuits 7 and 8, a switched-mode power supply device 9 of the present invention, etc. are housed in the chassis 2.

Incidentally, the vehicle is equipped with a higher-voltage power supply (HV power supply) 11 constituted of a higher-voltage battery of, for example, about direct current 300V (DC300V) for feeding power to the motor 3 of the vehicle-mounted electric compressor 1 and an unillustrated motor for traveling to drive it, and a lower-voltage power supply (LV power supply) 12 constituted of a battery (DC 12V power supply) of a normal direct current 12V (DC 12V). Further, the chassis 2 of the vehicle-mounted electric compressor 1 is conducted to a vehicle body (ground).

The inverter circuit 4 is constituted of unillustrated six switching elements comprised of three-phase bridgeconnected IGBTs or the like. Each switching element is controlled by a gate drive signal generated by a gate driver of the control circuit 6. The control circuit 6 is comprised of a microprocessor and switches each switching element of the inverter circuit 4 by means of the gate driver to perform PWM modulation, whereby the DC voltage of the higher-voltage power supply 11 is supplied to the motor 3 as a predetermined AC voltage.

The EMI filter circuit 7 is connected between the higher-voltage power supply 11 and the inverter circuit 4 and brings about the effect of reducing EMI noise generated by switching of the inverter circuit 4. Further, the EMI filter circuit 8 is connected between the lower-voltage power supply 12 and the switched-mode power supply device 9 and brings about the effect of reducing EMI noise generated by switching as described later in the switched-mode power supply device 9.

### (2) Switched-Mode Power Supply Device 9

The switched-mode power supply device 9 is a DC-DC converter for switching the lower-voltage power supply 12 (DC 12V) to generate a predetermined DC voltage (HV15V, HV5V) and supplying power to the control circuit 6. Incidentally, the HV15V is a voltage supplied to the gate driver (that the control circuit 6 has) which generates the gate drive signal of the inverter circuit 4, and the HV5V is a voltage which serves as a power supply for the control circuit 6.

The switched-mode power supply device 9 of the present embodiment has a switching transformer 15 configured by an insulation transformer constituted of a primary winding 13 and a secondary winding 14 insulated from the primary winding 13. A winding finish end (power supply plus side) 13B of the primary winding 13 of the switching transformer 15 is connected to the EMI filter circuit 8 by a primary side power supply line (LV +) 16 and further connected to the lower-voltage power supply 12.

In the embodiment, a drain terminal of a switching element 17 comprised of a MOSFET is connected to a winding start end (ground side) 13A of the primary winding 13, and a source terminal of the switching element 17 is connected to a primary side ground (LVGND) 18. That is, the winding start end 13A of the primary winding 13 of the switching transformer 15 is not directly connected to the primary side ground 18.

Reference numeral 19 in the figure is a switching power supply controller (controller). The switching power supply controller 19 is supplied with power from the lower-voltage power supply 12 via the primary side power supply line 16. The output of the switching power supply controller 19 is connected to a gate of the switching element 17. The switching element 17 is controlled in switching by the switching power supply controller 19.

Consequently, the primary winding 13 of the switching transformer 15 is located on the lower-voltage power supply 12 side. Incidentally, reference numeral 21 denotes a smoothing capacitor connected between the primary side power supply line 16 and the primary side ground 18. Further, in the embodiment, the primary side ground 18 insulated from the secondary side (secondary side ground 26 to be described later) by the switching transformer 15 is connected to the chassis 2 through a Y capacitor (line bypass capacitor) 22 which attenuates common mode noise.

On the other hand, the secondary winding 14 of the switching transformer 15 has a first secondary winding portion 23 having a winding start end 23A and a winding finish end 23B, and a second secondary winding portion 24 having a winding start end 24A and a winding finish end 24B in the same manner. The winding finish end 24B of the second secondary winding portion 24 is connected to the secondary side ground (HVGND) 26. The secondary side ground 26 serves as a stable potential portion (cold end) of the secondary winding 14.

Then, the winding start end 23A of the first secondary winding portion 23 is connected to an HV15V line (first higher-voltage side power supply line) 32 via a diode 31. The gate driver of the control circuit 6 described above is connected to the HV15V line 32. The winding start end 24A of the second secondary winding portion 24 is connected to an HV5V line (second higher-voltage side power supply line) 36 via a diode 33 and a regulator (LDO: low dropout regulator) 34. This HV5V line 36 serves as the power source for the control circuit 6.

Further, the winding start end 24A of the second secondary winding portion 24 is connected to the winding finish end 23B of the first secondary winding portion 23, and the winding finish end 24B of the second secondary winding portion 24 is connected to the secondary side ground 26 as described above.

Incidentally, designated at 37 to 39 are smoothing capacitors connected between the HV15V line 32 and the secondary side ground 26 and between the HV5V line 36 and the secondary side ground 26 after the regulator 34, respectively. Further, in the embodiment, the secondary side ground insulated from the primary side (primary side ground 18) by the switching transformer 15 is connected to the chassis 2 via a Y capacitor (line bypass capacitor) 41 which attenuates common mode noise.

Further, a shield body 43 is provided between the primary winding 13 and the secondary winding 14 of the switching transformer 15 in the embodiment. The shield body 43 in the embodiment is constituted of windings in each of which a copper wire is coated with an insulating film. The shield body 43 is connected to the primary side ground 18 which is a stable potential in the embodiment. Incidentally, the shield body 43 may be connected to the secondary side ground 26 (stable potential portion of the secondary winding 14). Further, the structure of the switching transformer 15 will be described in detail later.

Then, the switching power supply controller 19 performs switching control for the switching element 17 so that DC15V (HV15V) is output to the HV15V line 32 according to the turn ratio of the switching transformer 15. Thus, DC15V (HV15V) is supplied to the gate driver of the control circuit 6, and DC5V (HV5V) is supplied to the control circuit 6 itself from an intermediate output corresponding to the turn ratio of the secondary winding portions 23 and 24 via the regulator 34.

The switched-mode power supply device 9 switches the lower-voltage power supply 12 to supply power to the control circuit 6 and insulate the lower-voltage power supply 12 side where the primary winding 13 is located, and the higher-voltage power supply 11 side where the secondary winding 14 is located by the switching transformer 15 (this is indicated by a broken line "insulation" in the figure). However, as a countermeasure against EMI noise caused by switching of the switching element 17 of the switched-mode power supply device 9, the winding finish end 13B of the primary winding 13 of the switching transformer 15 and the winding finish end 24B of the secondary winding 14 are coupled via a coupling capacitor 42.

By coupling the winding end 13B of the primary winding 13 of the switching transformer 15 and the winding finish end 24B of the secondary winding 14 with the coupling capacitor 42 in this way, noise mutually transmitted between the primary winding 13 and the secondary winding 14 through a coupling capacitance (stray capacitance) between the windings (between the primary winding 13 and the secondary winding 14) of the switching transformer 15 is circulated with the switching of the switching element 17 so that a common mode noise current flowing on the chassis 2 side (ground: body side eventually) of the electric compressor 1 is suppressed. Consequently, a noise voltage is reduced.

### (3) Structure of Switching Transformer 15

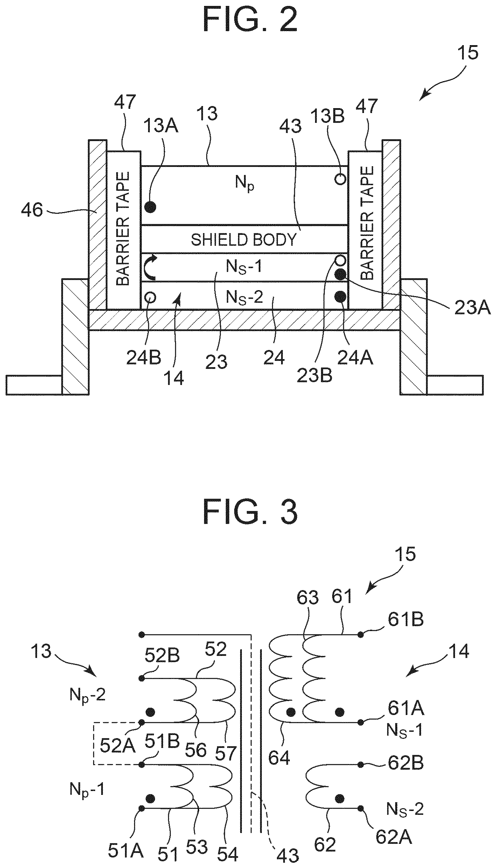

Next, the structure of the switching transformer 15 in the present embodiment will be described with reference to FIG. 2. In the figure, reference numeral 46 denotes a core in which the primary winding 13 (indicated by Np) and the secondary winding 14 (in which the first secondary winding portion 23 is indicated by Ns-1 and the second secondary winding portion 24 is indicated by Ns-2) are wound. Reference numeral 47 indicates a barrier tape wound with a width that meets the safety standard requirements. In the present invention, the primary winding 13 and the secondary winding 14 of the switching transformer 15 are separated as shown in FIG. 2, and as described above, the shield body 43 is provided between the primary winding 13 and the secondary winding 14.

That is, since the structure is not such that the secondary winding 14 is sandwiched with the primary winding 13, the degree of coupling between the primary winding 13 and the secondary winding 14 of the switching transformer 15 is lowered, but the coupling capacitance between the primary winding 13 and the secondary winding 14 is reduced, so that the amount of noise converted to the common mode can be reduced.

In particular, since the input of the switching transformer 15 is the lower-voltage power supply 12 and serves as the input of the low voltage of the DC 12V power supply as in the embodiment, it is comparatively easy to reduce the degree of coupling between the primary winding 13 and the secondary winding 14. An increase in surge voltage is limited even if the degree of coupling decreases. Therefore, it is possible to achieve a reduction in noise without using a large one as the EMI filter 8.

Further, in the embodiment, the shield body 43 is provided between the primary winding 13 and the secondary winding 14 of the switching transformer 15, and the shield body 43 is connected to the stable potential portion (the primary side ground 18 in the embodiment) of the switched-mode power supply device 9. It is therefore possible to further reduce the noise by utilizing an electrostatic shield effect.

Here, in the embodiment, the shield body 43 is constituted of the windings in each of which the copper wire is coated with the insulating film. Therefore, if the insulating film of the shield body 43 is made thin and/or the number of winding layers is reduced, the degree of coupling between the primary winding 13 and the secondary winding 14 increases, but the coupling capacitance also increases. On the other hand, if the insulating film is made thick and/or the number of winding layers is increased, the degree of coupling is lowered, but the coupling capacitance is also reduced.

Therefore, in the embodiment, when the switching transformer 15 is manufactured, the thickness of the insulating film of the copper wire and/or the number of winding layers is selected to thereby adjust the coupling degree and the coupling capacitance to be the optimum coupling degree and coupling capacitance required in the switched-mode power supply device 1. Thus, since the coupling capacitance between the primary winding 13 and the secondary winding 14 of the switching transformer 15 and the degree of coupling between the primary winding 13 and the secondary winding 14 are adjusted by selecting the thickness of the insulating film of the shield body 43 and/or the number of winding layers, it becomes easy to make both power efficiency and noise reduction of the switching transformer 15 compatible and design them optimally.

Then, the switched-mode power supply device 1 of the present invention becomes extremely suitable where it is provided in the vehicle-mounted electric compressor 1 including the control circuit 6, the inverter circuit 4 supplied with power from the higher-voltage power supply 11 and controlled by the control circuit 6, and the motor 3 driven by the inverter circuit 4 as in the embodiment.

### [Second Embodiment]

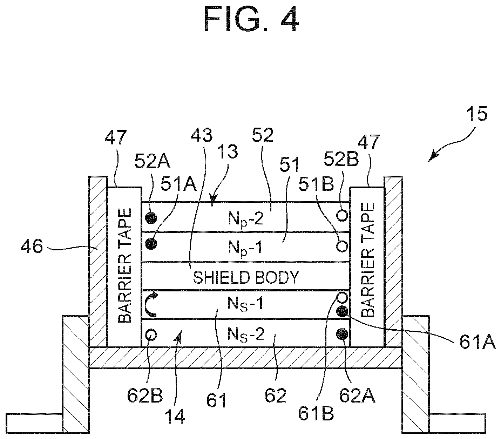

Next, a switched-mode power supply device 9 according to another embodiment of the present invention will be described with reference to FIGS. 3 and 4. FIG. 3 shows an electric circuit diagram of a switching transformer 15 of another embodiment used in the switched-mode power supply device 9, and FIG. 4 shows the structure thereof. Incidentally, in these figures, those shown by the same reference numerals as those in FIGS. 1 and 2 are assumed to perform the same or similar functions.

A primary winding 13 of the switching transformer 15 of this embodiment has a first primary winding portion 51 (indicated by Np-1) having a winding start end 51A and a winding finish end 51B, and a second primary winding portion 52 (indicated by Np-2) having a winding start end 52A and a winding finish end 52B in the same manner. The first primary winding portion 51 is comprised of two windings 53 and 54 connected in parallel. The second primary winding portion 52 is also comprised of two windings 56 and 57 connected in parallel.

Then, the winding finish end 52B of the second primary winding portion 52 is connected to the EMI filter circuit 8 by the primary side power supply line (LV +) 16 shown in FIG. 1 and further connected to the lower-voltage power supply 12. Further, the winding start end 52A of the second primary winding portion 52 is connected to the winding finish end 51B of the first primary winding portion 51, and the winding start end 51A of the first primary winding portion 51 is connected to the drain terminal of the switching element 17. A shield body 43 is connected to the primary side ground 18.

On the other hand, a secondary winding 14 of the switching transformer 15 has a first secondary winding portion 61 (indicated by Ns-1) having a winding start end 61A and a winding finish end 61B, and a second secondary winding portion 62 (indicated by Ns-2) having a winding start end 62A and a winding finish end 62B in the same manner. The first secondary winding portion 61 is comprised of two windings 63 and 64 connected in parallel. The winding finish end 61B of the first secondary winding portion 61 is connected to the secondary side ground (HVGND) 26. This secondary side ground 26 serves as a stable potential portion (cold end) of the secondary winding 14.

Then, the winding start end 62A of the second secondary winding portion 62 is connected to the HV15V line (first higher-voltage side power supply line) 32 via the diode 31. Further, the winding start end 61A of the first secondary winding portion 61 is connected to the HV5V line 36 via the diode 33 and the regulator 34.

Further, the winding start end 61A of the first secondary winding portion 61 is connected to the winding finish end 62B of the second secondary winding portion 62, and the winding finish end 61B of the first secondary winding portion 61 is connected to the secondary side ground 26.

### (4) Structure of Switching Transformer 15 of FIG. 3

Next, the structure of the switching transformer 15 in the embodiment of FIG. 3 will be described with reference to FIG. 4. In this case as well, those shown by the same reference numerals as those in FIG. 2 are assumed to perform the same or similar functions. That is, reference numeral 46 is a core in which the primary winding 13 (in which the first primary winding 51 is indicated by Np-1, and the second primary winding 52 is indicated by Np-2) and the secondary winding 14 (in which the first secondary winding portion 61 is indicated by Ns-1, and the second secondary winding portion 62 is indicated by Ns-2) are wound. Reference numeral 47 is a barrier tape wound with a width satisfying the safety standard requirements.

Also in the present embodiment, the primary winding 13 and the secondary winding 14 of the switching transformer 15 are separated as shown in FIG. 4. The shield body 43 is provided between the primary winding 13 and the secondary winding 14. That is, even in the case of the present embodiment, since the structure is not such that the secondary winding 14 is sandwiched with the primary winding 13, the degree of coupling between the primary winding 13 and the secondary winding 14 of the switching transformer 15 is lowered, but the coupling capacitance between the primary winding 13 and the secondary winding 14 is reduced, so that the amount of noise converted to the common mode can be reduced.

Incidentally, in each of the above embodiments, the shield body 43 is constituted of the windings in each of which the copper wire is coated with the insulating film, but the present invention is not limited thereto, and the shield body 43 may be constituted of a shield layer such as a copper foil or an insulator such as an interlayer (insulating) tape. In the case of the shield layer as well, if the thickness of the layer is made thin and/or the number of layers is reduced, the degree of coupling between the primary winding 13 and the secondary winding 14 increases, but the coupling capacitance also increases. On the other hand, if the thickness of the shield layer is made thick and/or the number of layers is increased, the degree of coupling decreases, but the coupling capacitance is also reduced.

Further, in the case of the insulator as well, if the thickness thereof is made thin and/or the number of layers is reduced, the degree of coupling between the primary winding 13 and the secondary winding 14 increases, but the coupling capacitance also increases. On the other hand, if the thickness of the insulator is made thick and/or the number of layers is increased, the degree of coupling decreases, but the coupling capacitance also decreases.

Therefore, when manufacturing the switching transformer 15 in the same manner, even if the thickness of the shield layer and/or the number of layers, or the thickness of the insulator and/or the number of layers is selected, and the coupling capacitance between the primary winding 13 and the secondary winding 14 of the switching transformer 15 and the degree of coupling between the primary winding 13 and the secondary winding 14 are adjusted to have the optimum coupling degree and capacitance required in the switched-mode power supply device 1, it becomes easy to make the power efficiency and noise reduction of the switching transformer 15 compatible and design them optimally.

Also, in each of the above embodiments, as shown in FIGS. 2 and 4, the primary winding 13 of the switching transformer 15 is used as an outer layer, and the secondary winding 14 is used as an inner layer, but the present invention is not limited thereto. The present invention is also effective in a configuration in which the primary winding 13 is used as the inner layer and the secondary winding 14 is used as the outer layer.

Further, as in the embodiment, there is no limitation to the structure in which the primary winding 13 is configured as the outer layer or the inner layer and the secondary winding 14 is configured as the inner layer or the outer layer. For example, even in the so-called sandwich structure in which the secondary winding 14 is sandwiched with the primary winding 13, it is possible to reduce the degree of coupling between the primary winding 13 and the secondary winding 14. In that case, the shield body 43 is inserted at each position where the primary winding 13 and the secondary winding 14 face each other, but the concept of separating the primary winding 13 and the secondary winding 14 in the present invention is assumed to include such a configuration as well.

In addition, in the embodiment, the switched-mode power supply device 9 of the vehicle-mounted electric compressor 1 has been described by way of example, but the inventions other than claims 5 and 6 are not limited to it, and the present invention is effective for various switched-mode power supply devices each of which switches a lower-voltage power supply.

### Description of Reference Numerals

1 vehicle-mounted electric compressor
2 chassis
3 motor
4 inverter circuit
6 control circuit
7, 8 EMI filter circuit
9 switched-mode power supply device
11 higher-voltage power supply
12 lower-voltage power supply
13 primary winding
14 secondary winding
15 switching transformer
17 switching element
18 primary side ground
19 switching power supply controller (controller)
26 secondary side ground
43 shield body
46 core.

## Claims

1. A switched-mode power supply device comprising:
a switching transformer which switches a lower-voltage power supply to supply power to a control circuit on a higher-voltage power supply side,
wherein the switching transformer has a primary winding on the lower-voltage power supply side and a secondary winding on the control circuit side to insulate the lower-voltage power supply side and the higher-voltage power supply side and the primary winding and the secondary winding are separated from each other.

2. The switched-mode power supply device according to claim 1, wherein the switching transformer includes a shield body provided between the primary winding and the secondary winding.

3. The switched-mode power supply device according to claim 2, wherein the shield body is connected to the primary winding of the switching transformer or a stable potential portion of the secondary winding.

4. The switched-mode power supply device according to claim 2 or 3, wherein the shield body is a winding having an insulating film, a shield layer, or an insulator.

5. The switched-mode power supply device according to any of claims 1 to 4, wherein the lower-voltage power supply is a DC 12V power supply mounted on a vehicle, and the control circuit controls a vehicle-mounted electric compressor driven by the higher-voltage power supply mounted on the vehicle.

6. A vehicle-mounted electric compressor comprising:
the switched-mode power supply device according to any of claims 1 to 5;
the control circuit;
an inverter circuit supplied with power from the higher-voltage power supply and controlled by the control circuit, and
a motor driven by the inverter circuit.

7. A method for manufacturing the switched-mode power supply device according to claim 4, comprising:
selecting the thickness of the insulating film of the winding constituting the shield body and/or the number of winding layers, the thickness of the shield layer and/or the number of layers, or the thickness of the insulator and/or the number of layers; and
thereby adjusting a coupling capacitance between the primary winding and the secondary winding of the switching transformer and the degree of coupling between the primary winding and the secondary winding.
